# EUROPEAN PATENT APPLICATION

(11) **EP 4 848 798 A1**
(43) Date of publication of application: **02.12.2026**
(21) Application number: 24919688.2
(22) Date of filing: 16.08.2024
(51) Int. Cl.: H04W 28/02

(54) **CONGESTION CONTROL METHOD, COMMUNICATION APPARATUS, AND STORAGE MEDIUM**

(30) Priority: 22.01.2024 CN 202410091432
(71) Applicant: ZTE Corporation, Shenzhen, Guangdong 518057 (CN)
(72) Inventor: YUAN, Liquan, Shenzhen, Guangdong 518057 (CN)
(74) Representative: Vossius & Partner Patentanwälte Rechtsanwälte mbB
(86) International application number: PCT/CN2024/112624
(87) International publication number: WO 2025/156606

(57) **Abstract**

The present disclosure provides a congestion control method, a communication device, and a storage medium. The congestion control method, applied to a first node, comprises: obtaining flow configuration information of a data flow; in a case where transmission scheduling of the data flow cannot meet a requirement of the flow configuration information, sending first congestion control information to a second node, the first congestion control information being used to indicate that congestion control is to be performed on the data flow.

## Description

The present disclosure claims priority to Chinese patent application No. 202410091432.1 filed on January 22, 2024, the disclosure of which is herein incorporated by reference in its entirety.

### FIELD

The present disclosure relates to the field of communications, and particularly, to a congestion control method, a communication device, and a storage medium.

### BACKGROUND

With the development of science and technology and advancement of digital transformation, many applications and services have increasingly high requirements for latency. When a large number of data packets are transmitted between communication nodes (e.g., between an access point (AP) and a station (STA)), data packets that cannot be sent in time may be stored in a buffer queue of the communication node (e.g., the AP).

### SUMMARY

In a first aspect, there is provided a congestion control method, applied to a first node. The congestion control method comprises: obtaining flow configuration information of a data flow; in a case where transmission scheduling of the data flow cannot meet a requirement of the flow configuration information, sending first congestion control information to a second node. The first congestion control information is used to indicate that congestion control is to be performed on the data flow.

In a second aspect, there is provided a congestion control method, applied to a second node. The congestion control method comprises: receiving first congestion control information sent by a first node, the first congestion control information being used to indicate that congestion control is to be performed on a data flow; and reducing a packet transmission rate of the data flow based on the first congestion control information.

In a third aspect, there is provided a congestion control apparatus. The congestion control apparatus comprises: an obtaining module configured to obtain flow configuration information of a data flow; a sending module configured to send first congestion control information to a second node, in a case where transmission scheduling of the data flow cannot meet a requirement of the flow configuration information. The first congestion control information is used to indicate that congestion control is to be performed on the data flow.

In a fourth aspect, there is provided a congestion control apparatus. The congestion control apparatus comprises: a receiving module configured to receive first congestion control information sent by a first node, the first congestion control information being used to indicate that congestion control is to be performed on a data flow; an adjustment module configured to reduce a packet transmission rate of the data flow based on the first congestion control information.

In a fifth aspect, there is provided a communication device, comprising: a memory and a processor. The memory is coupled to the processor; the memory is configured to store a computer program; and the processor, when executing the computer program, implements the congestion control method according to the first aspect or the second aspect above.

In a sixth aspect, there is provided a computer-readable storage medium having stored thereon computer program instructions, which, when executed by a processor, implement the congestion control method according to the first aspect or the second aspect above.

In a seventh aspect, there is provided a computer program product, comprising computer program instructions, which, when executed by a processor, implement the congestion control method according to the first aspect or the second aspect above.

For detailed depictions of the third to seventh aspects and their various implementations in the present disclosure, reference may be made to the detailed depictions of the first aspect, the second aspect, and their various implementations.

### BRIEF DESCRIPTION OF THE DRAWINGS

To illustrate technical solutions in the present disclosure more clearly, the accompanying drawings to be used in some embodiments of the present disclosure will be briefly introduced below. Apparently, the drawings described below are only drawings of some embodiments of the present disclosure, and those having ordinary skill in the art may also obtain other drawings from these drawings.
FIG. 1 illustrates a schematic diagram of a flow information format according to some embodiments of the present disclosure.
FIG. 2 illustrates a schematic diagram of another flow information format according to some embodiments of the present disclosure.
FIG. 3 illustrates a schematic diagram of yet another flow information format according to some embodiments of the present disclosure.
FIG. 4 illustrates a schematic diagram of information interaction between an AP and an STA according to some embodiments of the present disclosure.
FIG. 5 illustrates a schematic diagram of a frame format according to some embodiments of the present disclosure.
FIG. 6 illustrates a schematic diagram of a communication system according to some embodiments of the present disclosure.
FIG. 7 illustrates a flowchart of a congestion control method according to some embodiments of the present disclosure.
FIG. 8 illustrates a schematic diagram of yet another flow information format according to some embodiments of the present disclosure.
FIG. 9 illustrates a schematic diagram of yet another flow information format according to some embodiments of the present disclosure.
FIG. 10 illustrates a schematic diagram of yet another flow information format according to some embodiments of the present disclosure.
FIG. 11 illustrates a schematic diagram of a frame format of a first frame according to some embodiments of the present disclosure.
FIG. 12 illustrates a schematic diagram of another frame format of a first frame according to some embodiments of the present disclosure.
FIG. 13 illustrates a flowchart of another congestion control method according to some embodiments of the present disclosure.
FIG. 14 illustrates a flowchart of yet another congestion control method according to some embodiments of the present disclosure.
FIG. 15 illustrates a flowchart of yet another congestion control method according to some embodiments of the present disclosure.
FIG. 16 illustrates a flowchart of yet another congestion control method according to some embodiments of the present disclosure.
FIG. 17 illustrates a flowchart of yet another congestion control method according to some embodiments of the present disclosure.
FIG. 18 illustrates a flowchart of yet another congestion control method according to some embodiments of the present disclosure.
FIG. 19 illustrates a flowchart of yet another congestion control method according to some embodiments of the present disclosure.
FIG. 20 illustrates a flowchart of yet another congestion control method according to some embodiments of the present disclosure.
FIG. 21 illustrates a schematic structural diagram of a congestion control apparatus according to some embodiments of the present disclosure.
FIG. 22 illustrates a schematic structural diagram of another congestion control apparatus according to some embodiments of the present disclosure.
FIG. 23 illustrates a schematic structural diagram of a communication device according to some embodiments of the present disclosure.

### DETAILED DESCRIPTION

The technical solutions in the present disclosure will be clearly and completely described below with reference to the accompanying drawings in the present disclosure. Apparently, the described embodiments are only part of the embodiments of the present disclosure, not all of them. Based on the embodiments in the present disclosure, all other embodiments obtained by those having ordinary skill in the art without making creative efforts shall fall within the protection scope of the present disclosure.

It needs to be appreciated that in the present disclosure, words such as "exemplarily" or "for example" are used to indicate an example, an illustration, or an explanation. Any embodiment or design described with the words "exemplarily" or "for example" in the present disclosure should not be construed as being more preferred or advantageous than other embodiments or designs. More precisely, the use of words such as "exemplarily" or "for example" is intended to present a related concept in a concrete manner.

Hereinafter, terms such as "first" and "second" are used for descriptive purposes only and should not be understood as indicating or implying relative importance or implicitly indicating the number of indicated technical features. Thus, features defined with the terms such as "first" and "second" may explicitly or implicitly include one or more of those features. In addition, the terms such as "first" and "second" in the embodiments, claims and drawings of the specification of the present disclosure are only used for the purpose of distinguishing depictions and cannot be understood as indicating or implying relative importance, nor as indicating or implying an order.

In the description of the present disclosure, unless otherwise specified, "/" means "or", for example, A/B may represent A or B. "And/or" herein is merely an association relationship describing associated objects, indicating that three relationships may exist, e.g., A and/or B may mean: only A, only B, and both A and B. In addition, "at least one" means one or more, and "a plurality of" means two or more.

For ease of understanding, related concepts involved in the embodiments of the present disclosure are first briefly introduced.

### 1. Fiber-to-the-Room (FTTR) Technology

The FTTR technology provides high-bandwidth and high-reliability connection for the networking between a plurality of APs by connecting wireless routers (e.g., APs) in different rooms or locations in scenarios such as homes or small and medium-sized enterprises via optical fibers, and may achieve the connection between a master control AP and slave APs by using a point-to-multipoint optical distribution network.

### 2. Wireless Fidelity Media Access Control (Wi-Fi MAC) Layer Data Offloading and Transmission

Service data transmitted in a network has different requirements for quality of service (QoS). For example, voice services need to be transmitted in real time and are very sensitive to latency. When the Wi-Fi MAC layer transmits voice service data and ordinary service data simultaneously, the voice services need to be transmitted with a high priority.

A media access control (MAC) data frame defines a traffic identifier (TID) field to indicate a service priority. The MAC data frame containing the TID is called a QoS data frame. A MAC data frame not containing the TID is called a non-QoS data frame. The MAC layer classifies data service into 8 types, using TIDs 0-7 to represent the priorities of different service types. The MAC layer transmits different data services according to the priorities, in a descending order. Meanwhile, from the perspective of wireless channel access, 802.11 defines four Access Categories (ACs), including AC background (AC_BK), AC best effort (AC_BE), AC video (AC_VI), and AC voice (AC_VO). AC_VO has the highest priority, followed by AC_VI, then AC_BE and AC_BK.

For STAs that support the QoS function, the AP creates different buffer queues for QoS according to the STA address information and TID information, and performs transmission scheduling according to the priorities of the queues to ensure the latency requirement of each buffer queue or applications with different latency requirements. For example, for each QoS data frame, the downlink data primitive received by the AP from a logical link layer contains the following information:

```
         MA-UNITDATA.request (
         source address,
         destination address,
         routing information,
         data,
         priority,
         drop eligible,
         service class,
         station vector,
         MAC service data unit format (MSDU format),
         reception status
         )
```

The meaning of each field format is shown in Table 1.

**Table 1**

| Field | Meaning |
|---|---|
| source address | source address of MSDU transmission at the MAC layer |
| destination address | unicast or multicast MAC layer destination address |
| routing information | routing information |
| data | data information |
| priority | priority information |
| drop eligible | indicates whether the MSDU may be dropped |
| service class | indicates a service type: QoS data or non-QoS data |
| station vector | information for identifying a serving AP in a special scenario such as a Green Light Key (GLK) network |
| MSDU format | used to indicate MSDU format information under the Ethernet type |
| reception status | indicates successful reception by default |

After receiving this information, the MAC layer places the MSDU into a downlink data queue of each STA according to the priority and destination address.

For the STA, after the MSDU is received from the MAC layer, the data primitive sent to the logical link layer contains the following information:

```
         MA-UNITDATA.indication (
         source address,
         destination address,
         routing information,
         data,
         reception status,
         priority,
         drop eligible,
         service class,
         station vector,
         MSDU format,
         reception status
         )
```

The meaning of each field format is shown in the above Table 1.

### 3. Latency Issues

The end-to-end transmission delay is the sum of three different factors: propagation, an interface, and a queuing delay. For any application (e.g., an interactive web page, a web service, voice, conversational video, interactive video, interactive telepresence, instant messaging, an online game, a remote desktop, a cloud computing application, and a video-assisted remote control machinery and industrial process), the requirement to reduce interactive latency is becoming increasingly common. In related technologies, propagation delay is reduced by placing a buffer or a server at a position closer to the user. However, although the queuing delay is only one of factors affecting end-to-end transmission delay, the latency caused by queuing remains dominant. For example, it is very common that queuing causes a peak delay of hundreds of milliseconds. Furthermore, during a long-term operation of a data flow, even with the most advanced Active Queue Management (AQM), the path delay based on the speed of light propagation approximately doubles. Therefore, it is also very important to reduce the loss along the propagation path. For the interactive application, data loss along the propagation path translates into data packet retransmissions, which in turn leads to a longer retransmission delay.

### 4. L4S (Low Latency, Low Loss, Scalable Throughput)

L4S significantly reduces the latency experienced by data packets transmitted through a network. L4S addresses the biggest and most often overlooked problem which is also a source of latency and latency variation or jitter, i.e., queuing delay.

Queuing delay occurs when data packets wait idly in a buffer on the network, such as in a router and a modem, before being forwarded. As the user and a bandwidth-intensive application send more and more traffic through the network, these queued data packets can cause network links to become "congested". Data packets in a congested pipe take a longer time to reach their destinations.

Related technologies attempt to "sense" a data rate at which L4S data is transmitted through the network and use a congestion control algorithm to adjust their transmission rate based on the number of dropped data packets and the observed latency in the network. However, this solution requires a larger buffer and network latency to operate smoothly. L4S eliminates the need for a large buffer. When congestion occurs, L4S notifies a user application through a congestion signal carried in the data packet by a transmitter. Upon receiving the congestion signal, the user program promptly adjusts a rate of transmitting packets from a server application layer to an access layer, thereby reducing the amount of data queued per unit time on the server side, thereby achieving the purpose of low latency.

Exemplarily, the entire workflow of L4S comprises the following four steps.

In step 1, an application transmits data, including legacy data and L4S data, to a Wi-Fi system.

In step 2, a Wi-Fi MAC layer classifies the data into legacy data and L4S data according to an internet protocol (IP) packet identifier and places them into different data queues.

In step 3, when congestion occurs, an explicit congestion notification (ECN) field of the L4S data will be set to congestion experienced (CE); while the legacy data will be directly dropped (or set with a drop mark and handed to a scheduler for decision on how to drop).

In step 4, after receiving the L4S data with the CE mark, the receiving end adjusts the packet transmission rate of the server side through the application, and reduces the packet transmission rate of L4S data, thereby reducing the latency of the L4S data.

### 5. Stream Classification Service Technology

To optimize the scheduling of audio and video flow data at the Wi-Fi MAC layer and meet multimedia latency requirements, 802.1 laa proposes the Stream Classification Service (SCS). For an IPv4 packet, this means that before the service flow is transmitted, the STA informs the AP in advance of information such as service flow 5-tuple information <source IP address, source port, destination IP address, destination port, transport layer protocol>. For an IPv6 packet, the STA informs the AP in advance of information such as service flow 3-tuple information <source IP address, destination IP address, flow label>.

After receiving the data packet, the AP matches it against the service flow information according to characteristics of the data packet. Once successfully identified, the corresponding data packet is placed into a high-priority queue and scheduled accordingly to meet the latency requirement of these services.

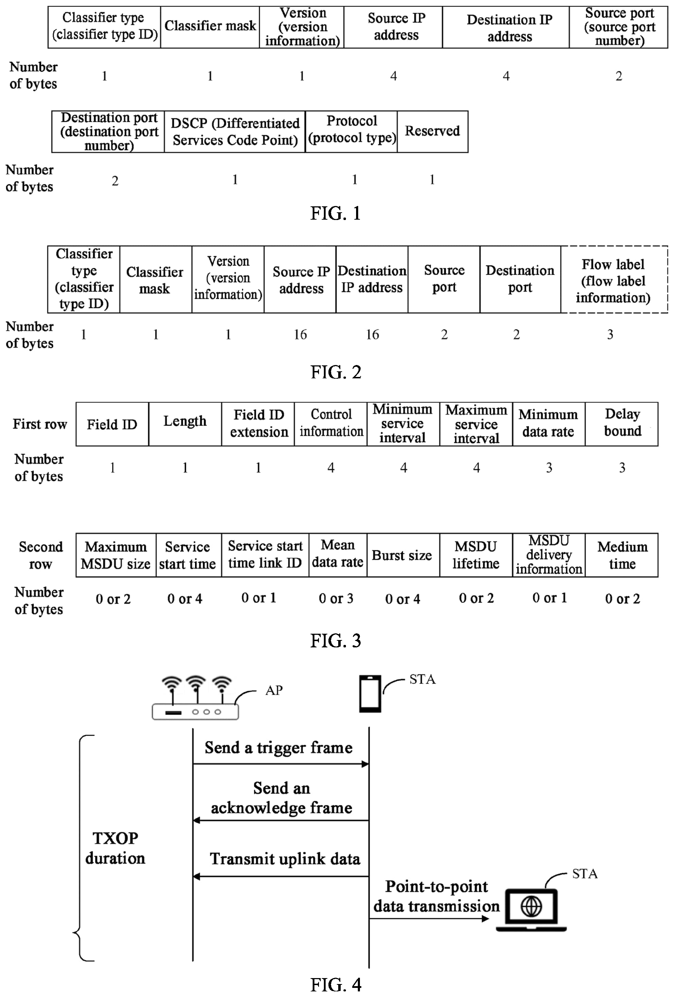

Exemplarily, the IPv4 packet flow information format is shown in FIG. 1, and the explanation of each field in FIG. 1 is shown in Table 2.

**Table 2**

| Field Name | Explanation |
|---|---|
| classifier type | classifier type ID |
| classifier mask | classifier mask |
| version | version information |
| source IP address | source IP address |
| destination IP address | destination IP address |
| source port | source port number |
| destination port | destination port number |
| DSCP | differentiated services code point |
| protocol | protocol type |
| reserved | reserved |

Exemplarily, the IPv6 packet flow information format is shown in FIG. 2, and the explanation of each field in FIG. 2 is shown in Table 3.

**Table 3**

| Field Name | Explanation |
|---|---|
| classifier type | classifier type ID |
| classifier mask | classifier mask |
| version | version information |
| source IP address | source IP address |
| destination IP address | destination IP address |
| source port | source port number |
| destination port | destination port number |
| flow label | Flow label information |

### 6. Flow Characteristic Technology

According to the stream classification service technology defined in 802.11aa, Wi-Fi 7 defines QoS Characteristic technology, where the STA sends a flow characteristic identification request to the AP by using an action frame. The request contains parameters such as a minimum service interval, a maximum service interval, a minimum data rate, a delay bound, a maximum MSDU size, a service start time, a MSDU delivery success rate, and an average channel access time. After receiving the flow characteristic identification request, the AP locally records the flow characteristic information and performs scheduling according to the flow characteristics of data packets when scheduling the uplink, downlink, and point-to-point data.

The format of the flow information (e.g., flow characteristic identification request action frame) sent by the STA to the AP is shown in FIG. 3. The second row in FIG. 3 comprises optional fields, and the control information field in the first row indicates whether the flow characteristic identification request frame contains the optional fields. The explanation of each field in FIG. 3 is shown in Table 4.

**Table 4**

| Field Name | Explanation |
|---|---|
| element ID | uniquely identifies this field |
| length | total length of the field |
| element ID extension | field internal identification information |
| control info | indicates whether subsequent fields are displayed, as well as information such as direction information, Traffic ID (TID) information, priority, etc. |
| minimum service interval | a minimum interval between start times of two consecutive services allocated to an STA |
| maximum service interval | a maximum interval between start times of two consecutive services allocated to an STA |
| minimum data rate | a minimum rate for transmitting a MSDU or A-MSDU (Aggregate MSDU) |
| delay bound | a maximum delay for transmitting the MSDU or A-MSDU |
| maximum MSDU size | a maximum size of the transmitted MSDU |
| service start time | an expected start time of data transmission |
| service start time link ID | a link corresponding to the expected start time of data transmission |
| mean data rate | a mean rate of transmitting the MSDU or A-MSDU |
| delayed bounded burst size | a maximum amount of the data of the MSDU or A-MSUD before the maximum delay is reached |
| MSDU lifetime | a maximum time an MSDU stays at the MAC layer (the MSDU might be dropped upon timeout) |
| MSDU delivery info | comprises two parameters: the MSDU delivery success rate and number of MSDUs |
| medium time | an average time an STA uses the channel to transmit data per second |

### 7. Trigger-based Transmission Opportunity (TXOP) Sharing Technology

The Wi-Fi 6 standard began introducing the TXOP sharing technology, which is a trigger mechanism-based wireless medium access manner. The AP obtains information such as uplink data volume, a rate, and a distance for each STA in advance; then, the AP synthesizes these information and shares TXOP parameters with one or more STAs via a trigger frame; then, the STAs can use the TXOP to transmit the uplink data.

Wi-Fi 7 extends the TXOP sharing technology based on Wi-Fi 6. The AP still transfers its TXOP to the STA via a trigger frame, but this trigger frame does not specify other parameters besides indicating TXOP time length information available to the STA. The trigger frame used by TXOP sharing technology is a Multi-User Request to Send (MU-RTS) TXOP Sharing (TXS) frame, i.e., adding the TXOP length information and other parameters to the MU-RTS frame defined in Wi-Fi 6.

As shown in FIG. 4, it is a schematic diagram of information interaction between an AP and an STA. As shown in FIG. 4, the AP may send a trigger frame (MU-RTS TXS) to the STA, and the STA sends an acknowledgement frame to the AP in response to the trigger frame. During the duration of the TXOP transferred by the AP to the STA, besides using the TXOP to transmit uplink data to the AP, the STA may also perform point-to-point data transmission to other STAs.

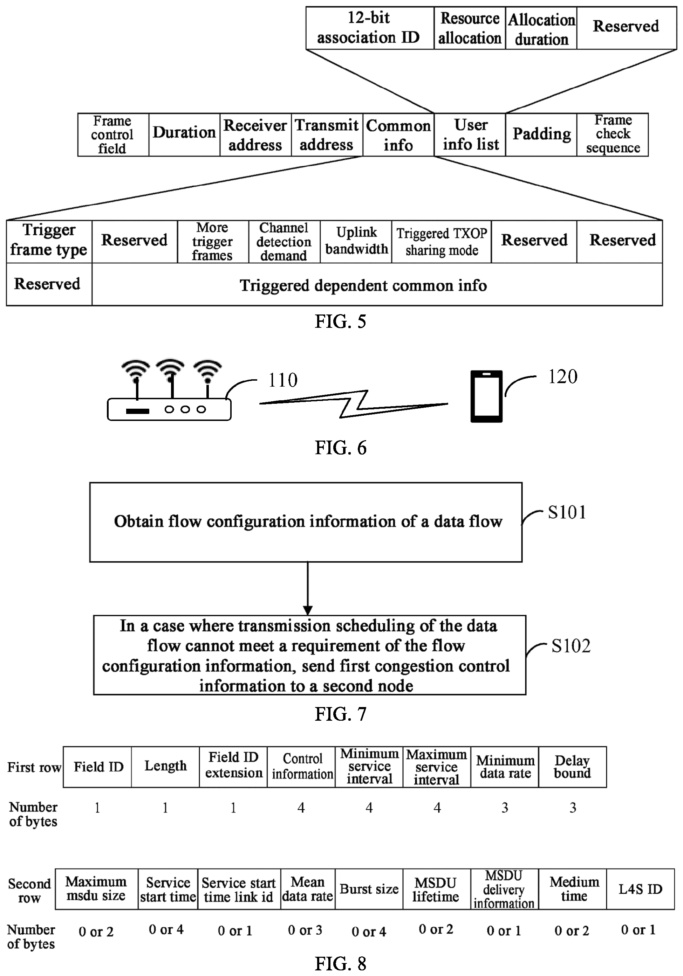

The TXOP sharing technology in the Wi-Fi 7 standard supports two modes, i.e., uplink data transmission and point-to-point data transmission. These two modes are Mode 1 and Mode 2. Mode 1 supports uplink data transmission, and Mode 2 supports both uplink data transmission and point-to-point data transmission. Exemplarily, the MU-RTS TXS frame format is shown in FIG. 5, and the explanation of each field is shown in Table 5.

**Table 5**

| Field | Explanation |
|---|---|
| frame control | contains frame control information |
| duration | frame duration length information |
| receiver address, RA | receiver address information |
| transmit address, TA | transmitter address information |
| common info | common information for all users |
| user info list | a list and information of different users |
| padding | a field-padding function |
| frame check sequence, FCS | a frame check function |
| trigger type | identify each frame type |
| more trigger frames | identify that there are more subsequent frames |
| channel detection demand | whether the STA needs to enable channel detection when the STA accesses the channel |
| uplink bandwidth, UL BW | total uplink bandwidth |
| triggered TXOP sharing mode | indicate which mode |
| triggered dependent common info | trigger-dependent common information |
| 12-bit Association Identifier (AID12) | used to uniquely identify an STA |
| resource unit allocation, RU allocation | resource allocation for the STA |
| allocation duration | TXOP duration information allocated to the STA |

### 8. (Wi-Fi 8) UHR

In July 2022, the Institute of Electrical and Electronics Engineers (IEEE) established an Ultra High Reliability (UHR) Study Group (SG). The task of this SG is to study the next-generation (Wi-Fi 8) technology evolution direction and plans to establish a 802.11bn working group in November 2023 and draft a Wi-Fi 8 protocol definition.

As can be seen from the project authorization request (PAR) published by the UHR SG in July 2023, the research direction of the UHR SG mainly focuses on improving transmission stability, including reducing latency, increasing throughput, and reducing a packet loss rate. Part of concepts involved in the embodiments of the present disclosure are introduced above, and will not be described in detail any more below.

When there are many data packets transmitted between communication nodes (e.g., between an access point (AP) and a station (STA)), the data packets that cannot be transmitted in time may be stored in a buffer queue of the communication node (e.g., AP). However, due to limited network resources, as data packets transmitted between communication nodes increase, the communication node (e.g., AP) may receive a large number of data packets in a short time period and might fail to process and forward the data packets in time, thereby leading to data congestion when the data packets are transmitted between the communication nodes. Data congestion will affect the transmission speed of the data packets, increase the transmission delay of data packets, and even lead to loss of data packets and service interruption between communication nodes, which is detrimental to the stable and efficient operation of the communication network.

A congestion control method according to embodiments of the present disclosure may be applied to various communication systems. For example, the communication systems may be a global system of mobile communication (GSM), a code division multiple access (CDMA) system, a wideband code division multiple access (WCDMA) system, a general packet radio service (GPRS), a Long Term Evolution (LTE) system, an LTE frequency division duplex (FDD) system, an LTE time division duplex (TDD) system, an advanced long term evolution (LTE-A) system, a universal mobile telecommunication system (UMTS), a worldwide interoperability for microwave access (WiMAX) communication system, a wireless local area network (WLAN) system, a Wi-Fi system, a 3GPP-related communication system, a 5^{th} Generation (5G) communication system, a future evolved communication system (e.g., 6^{th} Generation (6G) communication system, etc.), or a system integrating multiple systems, etc., which are not limited in the embodiments of the present disclosure.

In the embodiments of the present disclosure, the network architecture of a communication network (including but not limited to 3G, 4G, 5G, and future mobile communication networks) may at least comprise a first node and a second node. In this example, the first node may be a network-side device (e.g., including but not limited to an AP), and the second node may be a terminal-side device (e.g., including but not limited to an STA).

Exemplarily, taking an AP as the first node and an STA as the second node as an example, FIG. 6 illustrates a communication system according to an embodiment of the present disclosure. The communication system comprises an AP 110 and an STA 120. The AP 110 is communicatively connected to the STA 120.

In some embodiments, there may be one or more STAs 120, and the embodiments of the present disclosure do not limit the number of STAs.

The AP 110 is used to provide wireless network connection to a surrounding device (e.g., an STA) via a wireless signal, manage configuration of the wireless network, forward data transmission between wireless devices, etc.

In some embodiments, the AP 110 is used, for example, to receive an information frame transmitted by the STA 120. The information frame comprises configuration information and indication information (e.g., indication information for L4S data) of a data flow. After receiving the information frame, the AP 110 sends a response frame to the STA and locally stores the configuration information and indication information of the data flow.

In some embodiments, the data flow received by the AP comprises an uplink data flow, a downlink data flow, and a point-to-point data flow. Meanwhile, the data flow comprises different categories of data. For example, the data flow may comprise legacy QoS data, low-latency ordinary data, and low-latency L4S data. For the downlink data flow, after receiving the data flow containing L4S data and sent from a logical link layer, the AP 110 may further parse data header information according to the configuration information of the data flow, classify the data flow into different categories of data, and place them into different downlink scheduling queues.

In some embodiments, during the transmission of a data flow (e.g., L4S data), if the AP 110 determines that the transmission of the data flow cannot meet a scheduling demand, it enters a congestion control process. Exemplarily, the AP 110 may send a congestion control instruction to the STA 120, so that the STA 120 reduces the transmission rate of the data flow based on the congestion control instruction. When data is subsequently scheduled for transmission, if the AP 110 determines that the transmission scheduling of the data flow meets the demand, it may cancel the congestion control process.

In some embodiments, the AP 110 may also receive a data flow reconfiguration information frame transmitted by the STA 120, and update the locally stored configuration information of the data flow based on the content of the information frame.

In some embodiments, the AP 110 may be a single-link AP, a multi-link AP, or a distributed non-collocated access point multicast listener discovery (non-collocated AP MLD) protocol. Exemplarily, the AP may be a base transceiver station (BTS) in a GSM system or CDMA system, a Node B (NB) in a WCDMA system, an evolved node B (eNB or eNodeB) in an LTE system, or a wireless controller in a cloud radio access network (CRAN), or the AP may be a mobile switching center, a relay station, an access point, an in-vehicle device, a wearable device, a hub, a switch, a bridge, a router, a network-side device in a 5G network, or a network device in a future evolved public land mobile network (PLMN), etc.

The STA 120 is used for data transmission and access via the wireless network provided by the AP 110. In some embodiments, when the STA 120 has a data transmission demand, it may send an information frame to the AP 110. The information frame comprises configuration information and L4S indication information of the data flow. When the STA comprises a plurality of data flows, it may send the information frame to the AP 110 multiple times until the AP 110 completes the configuration of the data flows.

In some embodiments, the STA 120 may obtain a right to access a channel based on carrier sense multiple access/collision avoidance (CSMA/CA) channel contention or a trigger-based frame scheduling manner, and transmit L4S data in the uplink direction or point-to-point direction.

In some embodiments, the STA 120 may receive a congestion control instruction sent by the AP 110 and reduce the transmission rate of the data flow based on the congestion control instruction. Furthermore, the STA 120 may also receive a congestion control cancel instruction sent by the AP 110 to restore the transmission rate of the data flow.

In some embodiments, the STA 120 may also send a data flow reconfiguration information frame to the AP 110, so that the AP 110 updates the locally stored configuration information of the data flow based on the content of the information frame.

In some embodiments, the STA 120 may be a single-link STA or a multi-link STA. Exemplarily, the STA may be a cellular phone, a cordless phone, a Session Initiation Protocol (SIP) phone, a wireless local loop (WLL) station, a personal digital assistant (PDA), a handheld device with a wireless communication function, a computing device or other processing device connected to a wireless modem, an in-vehicle device or a wearable device, a virtual reality (VR) terminal device, an augmented reality (AR) terminal device, a wireless terminal in industrial control, a wireless terminal in self-driving, a wireless terminal in remote medical care, a wireless terminal in a smart grid, a wireless terminal in transportation safety, a wireless terminal in a smart city, a wireless terminal in a smart home, etc.

It should be appreciated that the above scenarios are intended to illustrate the technical solutions of the embodiments of the present disclosure more clearly and do not constitute a limitation on the technical solutions according to the embodiments of the present disclosure. Those having ordinary skill in the art will appreciate that with the evolution of system architectures and the emergence of new service scenarios, the technical solutions according to the embodiments of the present disclosure are equally applicable to similar technical problems.

In a communication system, data packet loss or marking mainly comprises the following two factors: (1) the AP receives a large number of data packets in a short time period but fails to send them out in time, causing the data packets to be continuously buffered locally, and eventually leaving no local buffer space to continue receiving new data packets, whereupon the AP has to drop relatively "old" data packets; (2) each data packet has a "lifetime". If data packets buffered locally are still not scheduled and sent out before their lifetime expires, these data packets will also be dropped.

In related technologies, determination of congestion of data packets is usually performed depending on the AP side. However, the AP may be connected to dozens or hundreds of STAs simultaneously, and different applications on each STA have different latency requirements. If congestion control is performed on data merely roughly based on the above factor (1) or factor (2), the precise latency required by the STAs cannot be satisfied, which is detrimental to the stable and efficient operation of the communication network.

To address the above problem, reference is made to FIG. 7 which illustrates a flowchart of a congestion control method according to an embodiment of the present disclosure. As shown in FIG. 7, the congestion control method according to the embodiment of the present disclosure is applied to a first node and comprises the following S101 and S102.

In S101, flow configuration information of a data flow is obtained.

In some embodiments, the first node (e.g., AP) may receive a sixth frame transmitted by a second node (e.g., STA). The sixth frame comprises the flow configuration information of the data flow. After receiving the flow configuration information, the first node stores it locally.

In some embodiments, the flow configuration information comprises flow characteristic information, and the flow characteristic information comprises third indication information which is used to indicate whether the data flow has characteristics of an L4S data flow.

Exemplarily, the flow characteristic information may indicate based on QoS Characteristic technology. As shown in FIG. 8, based on FIG. 3, third characteristic information is added to the QoS Characteristic field. For example, the third characteristic information may be an L4S flag to indicate whether the data flow has the characteristics of an L4S data flow. When the QoS Characteristic field carries the L4S flag, it indicates that the data flow has the characteristics of the L4S data flow. As shown in FIG. 8, the QoS Characteristic field also carries information such as a minimum service interval, a maximum service interval, a minimum data rate, a delay bound, etc., to instruct the first node to perform transmission scheduling of the data flow.

In some embodiments, the sixth frame further comprises at least one of: second indication information, direction information of the data flow. The second indication information is used to indicate that the data flow contains an L4S data flow.

In some embodiments, after receiving a downlink data flow containing the L4S flag, the first node may parse the header information of the data according to the flow configuration information, classify the data flow into different types, and place them into corresponding scheduling queues. Exemplarily, the data flow may include data types such as legacy QoS data, low-latency ordinary data, and low-latency L4S data.

It may be appreciated that since the second node (e.g., STA) might run a plurality of low-latency (including low-latency L4S and low-latency non-L4S) applications simultaneously, and different applications have different latency requirements, if the data flow (e.g., the L4S data) is solely divided only simply based on an ECN capable transport (ECT) marking, the latency requirement of each application cannot be satisfied. In the embodiment of the present disclosure, by parsing the data packet header information of the data flow, different types of data flows may be respectively placed into corresponding scheduling queues for processing to ensure that the latency requirement of different applications are satisfied. In this process, a special marking, such as the third indication information in the embodiment of the present disclosure, may be used to identify the L4S data, so as to better manage and schedule the data flows, thereby improving the performance of the network and user's experience.

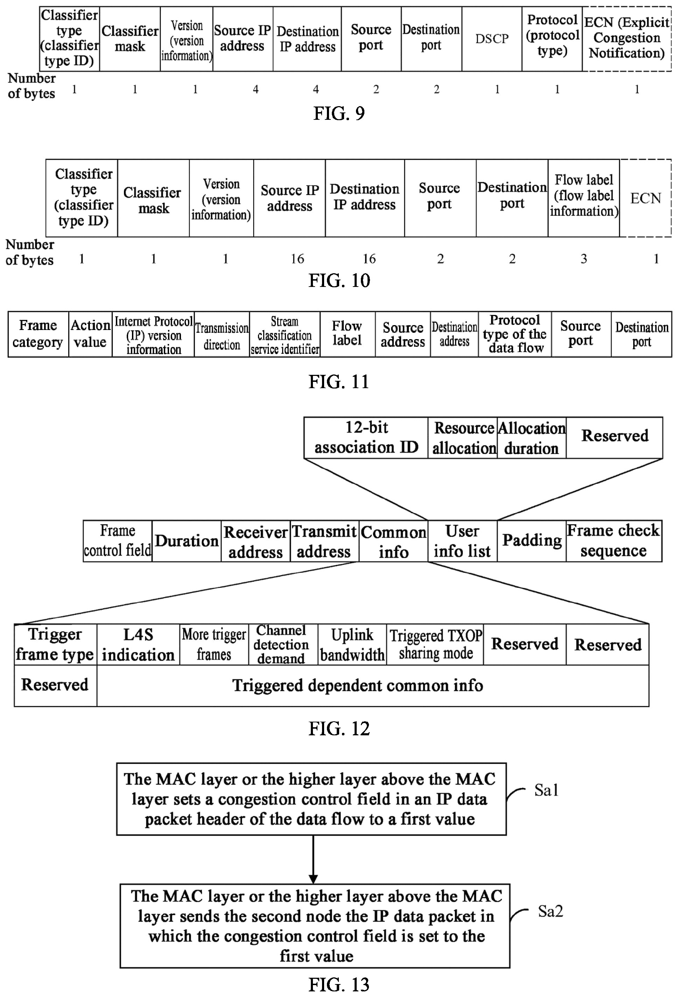

As an example, the second indication information may indicate based on IPv4 flow information. For example, as shown in FIG. 9, based on FIG. 1, second indication information having a 1-byte length is added to indicate that the data flow contains an L4S data flow. The form of the second indication information may be an ECN field. When the IPv4 flow information carries the second indication information (i.e., carries the ECN field), it indicates that the data flow is the L4S data flow; when the IPv4 flow information does not carry the second indication information (i.e., does not carry the ECN field), it indicates that the data flow does not contain the L4S data flow.

As another example, the second indication information may indicate based on IPv6 flow information. For example, as shown in FIG. 10, based on FIG. 2, second indication information having a 1-byte length is added to indicate that the data flow contains the L4S data flow. The form of the second indication information may be an ECN field. When the IPv6 flow information carries the second indication information (i.e., carries the ECN field), it indicates that the data flow is the L4S data flow; when the IPv6 flow information does not carry the second indication information (i.e., does not carry the ECN field), it indicates that the data flow does not contain the L4S data flow.

In some embodiments, the direction information of the data flow comprises at least one of: an uplink direction, a downlink direction, and a point-to-point direction. The uplink direction refers to the second node transmitting data to the first node, the downlink direction refers to the first node transmitting data to the second node, and the point-to-point direction refers to the second node transmitting data to other nodes other than the first node.

In some embodiments, the first node may also send a seventh frame to the second node. The seventh frame is used to respond to the sixth frame.

It may be appreciated that in the congestion control method according to the embodiment of the present disclosure, the first node obtains the flow configuration information of the data flow and may perform effective planning and transmission scheduling of the data flow based on the flow configuration information, to meet specific transmission demands of different data flows.

In S102, in a case where the transmission scheduling of the data flow cannot meet a requirement of the flow configuration information, first congestion control information corresponding to the data flow is sent to the second node.

The first congestion control information is used to instruct the second node to perform that congestion control on the data flow.

Exemplarily, if, during the transmission scheduling of the data flow by the first node, the delay bound in transmitting the data flow is greater than the delay bound indicated in the flow configuration information, i.e., the first node's transmission scheduling of the data flow cannot meet the requirement of the flow configuration information, then the first node sends congestion control information to the second node to instruct the second node to perform congestion control on the data flow.

It may be appreciated that in the congestion control method according to the embodiment of the present disclosure, when the transmission scheduling of the data flow cannot meet the requirement of the flow configuration information, the first node sends the congestion control information to the second node to instruct the second node to perform congestion control on the data flow, which may effectively avoid the occurrence of congestion in the communication network and improve the reliability and stability of data flow transmission.

In some embodiments, the sending first congestion control information corresponding to the data flow to the second node comprises: sending a first frame to the second node. The first frame comprises the first congestion control information. After receiving the first frame, the second node may actively reduce the transmission rate of the data flow based on the first congestion control information in the first frame.

In some embodiments, as shown in FIG. 11, the first frame further comprises at least one of: a frame category, Internet Protocol (IP) version information, a transmission direction, a flow label, a flow classification service identifier, a source address, a destination address, a protocol type of the data flow, a source port, a destination port, etc. Other fields in the first frame and the meanings of the field names in the first frame are shown in Table 6 below.

**Table 6**

| Field name | Meaning |
|---|---|
| category | for solely identifying a frame category (a congestion indication information frame) |
| action | Value 0 indicates a congestion control request, value 1 indicates cancelling the congestion control request, value 2 indicates a congestion control response, value 3 indicates cancelling the congestion control response, and values 4-255 indicate reserved fields. |
| version | IP version information |
| direction | indicates an uplink direction, a downlink direction or a point-to-point direction |
| SCSID | SCS flow identification information |
| flow label | flow identification information |
| source address | a source address corresponding to the service flow |
| destination address | a destination address corresponding to the service flow |
| protocol | a protocol type corresponding to the service flow, e.g., Transmission Control Protocol (TCP) or User Datagram Protocol (UDP) |
| source port | a source port corresponding to the service flow |
| destination port | a destination port corresponding to the service flow |

In some embodiments, when the transmission direction of the data flow is the uplink direction or the point-to-point direction, the first frame may be an MU-RTS TXS frame. At this time, as shown in FIG. 12, on the basis of the above FIG. 5, the first node may extend the MU-RTS TXS frame to allow it to carry the congestion control information. For example, an L4S indication is newly added to indicate that the frame carries the congestion control information. Alternatively, the first node may newly define a first frame to carry the congestion control information.

In some embodiments, the first node may also receive a second frame transmitted by the second node. The second frame is used to respond to the first frame.

In some embodiments, a protocol stack of the first node comprises a MAC layer and a higher layer above the MAC layer. As shown in FIG. 13, the sending first congestion control information corresponding to the data flow to the second node comprises Sa1 and Sa2.

In Sa1, the MAC layer or the higher layer above the MAC layer sets the congestion control field in an IP data packet header of the data flow to a first value.

In some embodiments, the MAC layer or the higher layer above the MAC of the first node may directly modify the congestion control field in the IP data packet header in the scheduling queue corresponding to the data flow. Exemplarily, the congestion control field may be an MSDU field. At the MAC layer, the first node may set the MSDU of the data in the scheduling queue corresponding to the L4S data to the first value. Alternatively, the congestion control field may be a CE field. The first node may set the CE field of the MPDU containing the ECT indication in the data to the first value. Exemplarily, the first value may be 1.

It needs to be appreciated that the higher layer above the MAC layer in the protocol stack of the first node mentioned in the embodiment of the present disclosure may be a higher layer such as a logical link layer or a network layer. That is, the higher layer above the MAC layer is only a higher layer in the protocol stack of the first node other than the MAC layer. The form of the higher layer above the MAC layer may vary depending on scenarios and actual implementations, which is not limited in the embodiments of the present disclosure.

In Sa2, the MAC layer or the higher layer above the MAC layer sends the second node an IP data packet in which the congestion control field is set to the first value.

It may be appreciated that in the congestion control method according to the embodiments of the present disclosure, the first node sets the congestion control field in the IP packet header to the first value and sends it to the second node, so that the second node can perceive the congestion situation in time, thereby facilitating timely congestion control, reducing data transmission delay, and improving the real-time performance and responsiveness of data transmission.

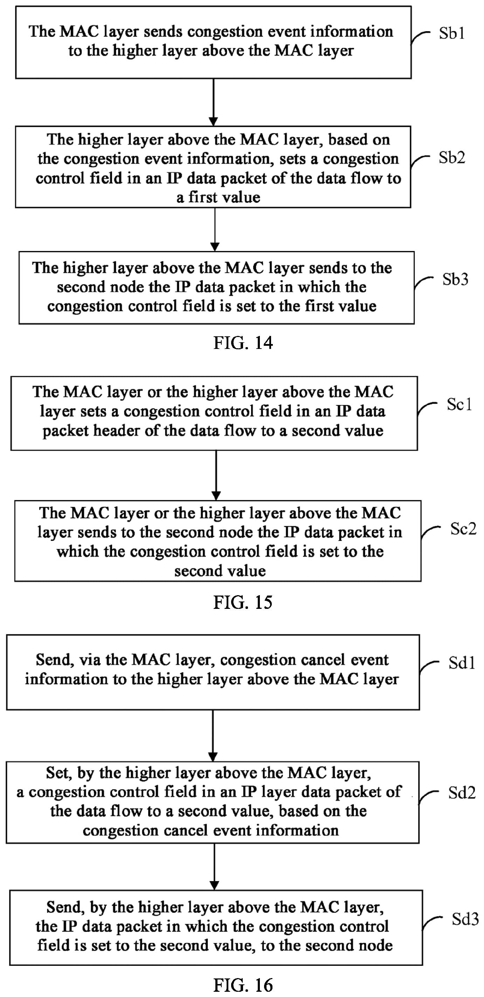

In some embodiments, the protocol stack of the first node comprises a MAC layer and a higher layer above the MAC layer. As shown in FIG. 14, the sending first congestion control information corresponding to the data flow to the second node comprises Sb1 through Sb3.

In Sb1, the MAC layer sends congestion event information to the higher layer above the MAC layer.

In some embodiments, the congestion event information is a congestion event primitive. After generating the congestion event information, the MAC layer reports the congestion event information to the higher layer (e.g., a logical link layer or a network layer) above the MAC layer in the form of the congestion event primitive.

In some embodiments, the congestion event primitive comprises at least one of: a source address, a destination address, stream classification service identifier, an IP type, a flow label, a destination port or a source port.

As an example, the form of the congestion event primitive is as follows:

```
         MLME-L4S-congestion.indication (
         source address,
         destination address,
         SCSID,
         IP protocol,
         Source port,
         Destination port,
         Flow label
     )
```

As another example, the form of the congestion event primitive is as follows:

```
         MA-UNITDATA.indication (
         source address,
         destination address,
         routing information,
         data,
         priority,
         drop eligible,
         service class,
         station vector,
         MSDU format,
         L4S-CE
         )
```

Based on the above two examples, when the first node transmits the congestion event information, it may use the drop eligible field to indicate the L4S information; alternatively, the first node may additionally add an L4S-CE field to the downlink data primitive in a primitive-based manner to indicate the L4S information.

In Sb2, the higher layer above the MAC layer, based on the congestion event information, sets the congestion control field in the IP data packet of the data flow to the first value.

In some embodiments, after obtaining the congestion event information through the MAC layer, the higher layer above the MAC layer sets the congestion control field to the first value in the IP data packet of the corresponding data flow. Exemplarily, the first value may be 1.

In Sb3, the higher layer above the MAC layer sends the second node an IP data packet in which the congestion control field is set to the first value.

In some embodiments, after receiving the IP data packet in which the congestion control field is set to the first value, the second node may actively reduce the transmission rate of the data flow in the uplink direction or the point-to-point direction.

It may be appreciated that an Explicit Congestion Notification (ECN) marking is located in the packet header of the IP layer, and the 802.11 protocol is only responsible for parsing and processing information at the MAC layer and the physical layer, and cannot directly modify the content of the IP layer. Therefore, it is necessary to define a new way to perform congestion marking on data flows to indicate that congestion control is to be performed on the data flow. In the congestion control method according to the embodiment of the present disclosure, congestion control on data flows may be implemented in a wireless network by setting the congestion control field (e.g., CE field) to the first value to perform congestion marking on the data flow to indicate that congestion control needs to be performed.

In some embodiments, after receiving the congestion event information, the higher layer above the MAC layer may also assemble an Internet Control Message Protocol (ICMP) message and send it to the second node, so that the second node actively reduces the transmission rate of the data flow in the uplink direction or the point-to-point direction based on the ICMP message.

It may be appreciated that in the congestion control method according to the embodiments of the present disclosure, the first node sets the congestion control field in the IP data packet header to the first value and sends it to the second node, so that the second node may perceive the congestion situation in time, thereby facilitating timely congestion control, reducing data transmission delay, and improving the real-time performance and responsiveness of data transmission.

Furthermore, in the embodiments of the present disclosure, when the first node sends the second node the congestion control information corresponding to the data flow, the triggering of congestion control on the data flow may be made more flexible and the flexibility of the solution may be increased by employing different sending manners (e.g., sending the first frame, sending to the second node an IP data packet with the congestion control field set to the first value, etc.).

In some embodiments, the congestion control method further comprises: in a case where the transmission scheduling of the data flow meets the requirement of the flow configuration information, stopping sending the first congestion control information to the second node.

Exemplarily, after the first node sends the congestion control information to the second node, because the amount of data received by the first node decreases, the first node compares the transmission scheduling of the data flow with its locally stored flow configuration information at this time to determine whether to continue sending congestion control information. When the transmission scheduling of the data flow meets the flow configuration information, the first node stops sending the congestion control signal to the second node.

It may be appreciated that when the transmission scheduling of the data flow meets the requirement of the flow configuration information, it is indicated that the current network state supports normal transmission of the data flow. At this time, if congestion control information continues to be sent to the second node, network bandwidth will be wasted, and excessive congestion control information will be generated. Furthermore, excessive congestion control information might lead to increased queuing and waiting time of data packets in the network, thereby increasing network latency during data transmission and reducing the response speed and real-time performance of the network. In the congestion control method according to the embodiments of the present disclosure, in a case where the transmission scheduling of the data flow meets the requirement of the flow configuration information, stopping sending the congestion control information to the second node may save network bandwidth, ensure normal transmission of the data flow, and reduce data congestion.

In some embodiments, the congestion control method further comprises: in a case where the transmission scheduling of the data flow meets the requirement of the flow configuration information, sending congestion control cancel information to the second node.

The congestion control cancel information is used to instruct the second node to cancel the congestion control on the data flow.

Exemplarily, after the first node sends the congestion control information to the second node, because the amount of data received by the first node decreases, the first node compares the transmission scheduling of the data flow with its locally stored flow configuration information at this time to determine whether to cancel the congestion control on the data flow. When the transmission scheduling of the data flow meets the flow configuration information, the first node sends the congestion control cancel information to the second node to instruct the second node to cancel the congestion control on the data flow.

In some embodiments, the sending congestion control cancel information to the second node comprises: sending a third frame to the second node. The third frame comprises the congestion control cancel information.

In some embodiments, the third frame further comprises at least one of: a frame type, IP version information, a transmission direction, a flow label, a stream classification service identifier, a source address, a destination address, a protocol type of the data flow, a source port, or a destination port.

In some embodiments, the format of the third frame may refer to that of the first frame in FIG. 12 described above, and will not be described in detail any more in the embodiments of the present disclosure.

In some embodiments, the first node may also receive a fourth frame transmitted by the second node. The fourth frame is used to respond to the third frame.

In some embodiments, a protocol stack of the first node comprises a MAC layer and a higher layer above the MAC layer. As shown in FIG. 15, the sending congestion control cancel information to the second node comprises Sc1 and Sc2.

In Sc1, the MAC layer or the higher layer above the MAC layer sets the congestion control field in an IP packet header of the data flow to a second value.

In some embodiments, the MAC layer or the higher layer above the MAC layer may directly modify the congestion control field in the IP data packet header in the scheduling queue corresponding to the data flow. Exemplarily, the congestion control field may be an MSDU field. At the MAC layer, the first node may set the MSDU of the data in the scheduling queue corresponding to the L4S data to the second value. Alternatively, the congestion control field may be a CE field. The first node may set the CE field of the MPDU containing the ECT indication in the data to the second value. Exemplarily, the second value may be 0.

In Sc2, the MAC layer or the higher layer above the MAC layer sends the second node an IP data packet in which the congestion control field is set to the second value.

In some embodiments, the protocol stack of the first node comprises a MAC layer and a higher layer above the MAC layer. As shown in FIG. 16, the sending congestion control cancel information to the second node comprises Sd1 through Sd3.

In Sd1, the MAC layer sends congestion cancel event information to the higher layer above the MAC layer.

In some embodiments, the congestion cancel event information is a congestion cancel event primitive. After generating the congestion event information, the MAC layer reports the congestion cancel event information to the higher layer (e.g., a logical link layer) above the MAC layer in the form of the congestion cancel event primitive.

In some embodiments, the congestion cancel event primitive comprises at least one of: a source address, a destination address, a stream classification service identifier, an IP type, a flow label, a destination port or a source port.

As an example, the form of the congestion cancel event primitive is as follows:

```
     MLME-L4S-congression-cancel.indication (
     source address,
     destination address,
     SCSID,
     IP protocol,
     Source port,
     Destination port,
     Flow label
     )
```

As another example, the form of the congestion cancel event primitive is as follows:

```
    MA-UNITDATA.indication (
    source address,
    destination address,
    routing information,
    data,
    priority,
    drop eligible,
    service class,
    station vector,
    MSDU format,
    L4S-CE
    )
```

In Sd2, the higher layer above the MAC layer, based on the congestion cancel event information, sets the congestion control field in the IP data packet of the data flow to a second value.

In some embodiments, after obtaining the congestion event information through the MAC layer, the higher layer above the MAC layer of the first node sets the congestion control field to the second value in the IP data packet in the corresponding data flow. Exemplarily, the second value may be 1.

In Sd3, the higher layer above the MAC layer sends the second node an IP data packet in which the congestion control field is set to the second value.

It may be appreciated that in the method according to the embodiments of the present disclosure, the first node sets the congestion control field in the IP data packet header to the second value and sends it to the second node, so that the second node may perceive the congestion situation in time, thereby helping cancel the congestion control in time and ensuring normal transmission of the data flow.

Furthermore, in the embodiments of the present disclosure, when the first node sends the second node the congestion control cancel information corresponding to the data flow, the triggering of congestion control on the data flow may be made more flexible and the flexibility of the solution may be increased by employing different sending manners (e.g., sending the third frame, sending the second node an IP data packet with the congestion control field set to the second value, etc.).

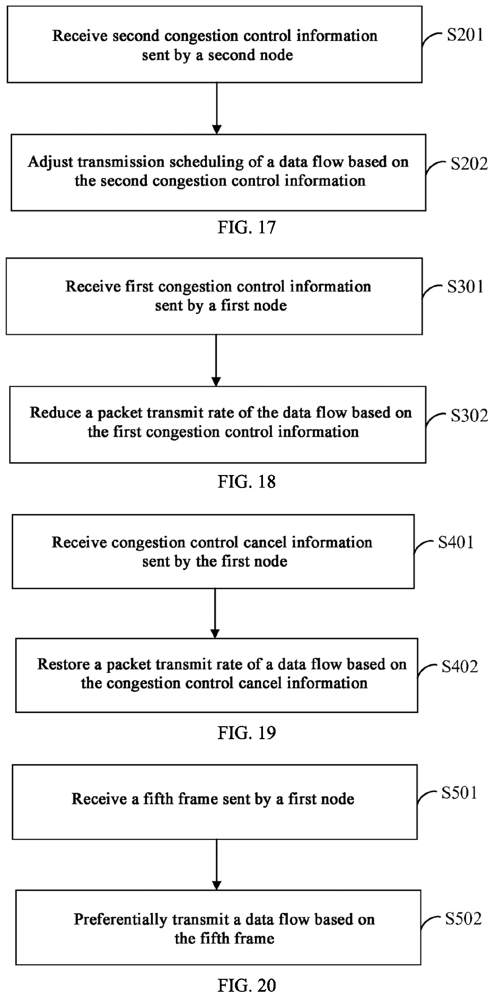

In some embodiments, as shown in FIG. 17, the congestion control method further comprises S201 and S202.

In S201, second congestion control information sent by the second node is received.

In some embodiments, when the second node detects that the transmission scheduling of the data flow cannot meet the requirement of the flow configuration information, it sends the second congestion control information to the first node, i.e., the first node may receive the second congestion control information sent by the second node.

In S202, the transmission scheduling of the data flow is adjusted based on the second congestion control information.

It may be appreciated that the L4S protocol in related technologies only supports the congestion control on L4S data in the downlink direction (i.e., in a case where the second node acts as the receiving end of the data flow), and the second node has no way to inform the first node of the congestion situation of its uplink L4S data through the MAC layer protocol. Correspondingly, the first node cannot perform corresponding uplink scheduling according to the indication of the second node. In addition, the current L4S protocol does not support L4S congestion control in the point-to-point direction. That is, when one second node transmits L4S data to another second node via a point-to-point technology, the second node has no way to inform the first node of the L4S congestion situation in its point-to-point direction through the MAC layer protocol, and the AP cannot perform corresponding point-to-point trigger-based scheduling according to the corresponding L4S indication. In the congestion control method according to the embodiments of the present disclosure, when the second node detects that the transmission scheduling of the data flow cannot meet the requirement of the flow configuration information, it sends congestion control information to the first node to enable the first node to adjust the transmission scheduling of the data flow in time based on the congestion control information, thereby ensuring the transmission latency requirement of the data flow.

In some embodiments, the adjusting the transmission scheduling of the data flow comprises: sending a fifth frame to the second node. The fifth frame is used to trigger priority transmission of the data flow.

In some embodiments, the fifth frame comprises first indication information to trigger priority transmission of the L4S data flow. After receiving the fifth frame, the second node, based on the first indication information in the fifth frame, preferentially transmits the L4S data flow in the uplink direction or point-to-point direction.

It may be appreciated that in the congestion control method according to the embodiments of the present disclosure, it is possible to, by using the fifth frame to trigger priority transmission of the data flow, ensure a specific data flow (e.g., an L4S data flow) is transmitted with a higher priority, thereby ensure the transmission efficiency of that specific data flow and reduce transmission delay.

In some embodiments, the fifth frame does not include association identifier (AID) information of the second node, to trigger any station to contend for a resource unit allocated in the fifth frame to transmit low latency, low loss, scalable throughput (L4S) data flow. It may be appreciated that when the first node sends the fifth frame to the second node, if the fifth frame does not specify the AID information of the second node, the Resource Unit (RU) is a Random Access Channel Resource Unit (RA-RU) at this time, i.e., all second nodes containing the L4S data flow may contend for the RA-RU that comprises the first indication information.

It may be appreciated that when the fifth frame does not include the Association Identifier (AID) information of the second node, all second nodes containing the L4S data flow may contend for the RA-RU that comprises the first indication information, which improves the utilization rate of network resources, helps increase the number and quality of data flows transmitted in the network, reduces queuing and waiting times of data packets, and thus reduces the transmission delay of data flows.

In some embodiments, the congestion control method further comprises: receiving an eighth frame transmitted by the second node. The eighth frame is used to modify the flow configuration information of the data flow.

In some embodiments, after receiving the eighth frame, the first node updates the configuration information of the locally stored data flow, L4S indication information, etc., based on the indication of the eighth frame.

In some embodiments, the first node may also send a ninth frame to the second node. The ninth frame is used to respond to the eighth frame.

It may be appreciated that in the congestion control method according to the embodiments of the present disclosure, the first node, by modifying the flow configuration information of the data flow through the eighth frame, may dynamically adjust allocation and management policies of network resources to meet different application scenarios and requirements, thereby improving the utilization efficiency of network resources.

According to the congestion control method according to the embodiments of the present disclosure, the first node, by obtaining the flow configuration information of the data flow, may perform effective planning and transmission scheduling of the data flow based on the flow configuration information, to meet the specific transmission demands of different data flows. Secondly, in a case where the transmission scheduling of the data flow cannot meet the requirement of the flow configuration information, the first node sends congestion control information to the second node to instruct the second node to perform congestion control on the data flow, which may effectively avoid the occurrence of congestion in the communication network and improve the reliability and stability of data flow transmission.

Referring to FIG. 18, FIG. 18 illustrates a flowchart of yet another congestion control method according to some embodiments of the present disclosure. As shown in FIG. 18, the congestion control method according to the embodiment of the present disclosure is applied to a second node and comprises the following S301 and S302.

In S301, first congestion control information sent by a first node is received.

The first congestion control information is used to indicate that congestion control is to be performed on a data flow.

In some embodiments, a protocol stack of a second node comprises a MAC layer and a higher layer above the MAC layer. The receiving first congestion control information sent by a first node comprises: receiving a first frame transmitted by the first node, wherein the first frame comprises the first congestion control information; or, receiving, by the MAC layer, an IP data packet sent by the first node in which a congestion control field is set to a first value; or, receiving, by the higher layer above the MAC layer, an IP packet sent by the first node in which the congestion control field is set to the first value.

It needs to be appreciated that the higher layer above the MAC layer in the protocol stack of the second node mentioned in the embodiments of the present disclosure may be a higher layer such as a logical link layer or a network layer. That is, the higher layer above the MAC layer is only a higher layer in the protocol stack of the second node other than the MAC layer. The form of the higher layer above the MAC layer may vary depending on the scenarios and actual implementations, which is not limited in the embodiments of the present disclosure.

In some embodiments, reference may be made to the above description of S102 for the implementation of the above S301, which will not be described in detail any more here.

It may be appreciated that in the congestion control method according to the embodiments of the present disclosure, the first node may send the congestion control information to the second node in different sending manners (e.g., sending the first frame, an IP layer data packet with the congestion control field set to the first value, etc.), i.e., the second node may receive the congestion control information in different receiving manners, which may make the triggering of congestion control on the data flow by the second node more flexible and increase the flexibility of the solution.

In S302, a packet transmission rate of the data flow is reduced based on the first congestion control information.

It may be appreciated that in the congestion control method according to the embodiments of the present disclosure, when the transmission scheduling of the data flow cannot meet the requirement of the flow configuration information, the second node, by receiving the congestion control information sent by the first node, may perform the congestion control on the data flow in time, thereby effectively avoiding the occurrence of congestion in the communication network and improving the reliability and stability of data flow transmission.

In some embodiments, the reducing a packet transmission rate of the data flow comprises: reducing, by the second node itself, the packet transmission rate of the data flow in a case where the second node acts as a transmission end of the data flow.

Exemplarily, after receiving the congestion control information, the second node notifies the upper layer of its protocol stack (i.e., the higher layer above the MAC layer) of the congestion control information. After receiving the congestion control information, the upper layer of the protocol stack actively reduces the packet transmission rate of the data flow.

In some embodiments, the reducing a packet transmission rate of the data flow comprises: sending a first control message to a server of the data flow in a case where the second node acts as a receiving end of the data flow. The first control message is used to instruct the server to reduce a downlink packet transmission rate of the data flow.

Exemplarily, the first control message may be an ICMP message.

Exemplarily, in the case where the second node acts as the receiving end of the data flow, after receiving the congestion control information, the second node generates congestion event information and reports the congestion event information to the higher layer above the MAC layer (e.g., a logical link layer) of the second node. The congestion event information is a congestion event primitive. After generating the congestion event information, the MAC layer reports the congestion event information as a congestion event primitive to the higher layer above the MAC layer. The higher layer above the MAC layer of the second node may adjust the packet transmission rate of the second node. For example, an application layer of the second node transmits the ICMP message to the server of the data flow to reduce a downlink packet transmission rate of the data flow.

In some embodiments, the congestion event primitive comprises at least one of: a source address, a destination address, a stream classification service identifier, an IP type, a flow label, a destination port, or a source port. Exemplarily, reference may be made to the above description of Sb1 for the content of the congestion event primitive, which will not be described in detail any more here in the embodiments of the present disclosure.

It may be appreciated that in the congestion control method according to the embodiments of the present disclosure, the second node, by transmitting the first control message to the server of the data flow, may achieve the control of the packet transmission rate of the data flow, thereby helping to avoid data congestion and network overload, improving stability and reliability of the network, and ensuring timely data transmission.

In some embodiments, the congestion control method further comprises: in a case where the first congestion control information is not received within a preset time period, restoring the packet transmission rate of the data flow. Exemplarily, the preset time period may be 5 minutes.

It may be appreciated that when the transmission scheduling of the data flow meets the requirement of the flow configuration information, it is indicated that the current network state supports normal transmission of the data flow. At this time, if congestion control information continues to be sent to the second node, network bandwidth will be wasted, and excessive congestion control information will be generated. Furthermore, excessive congestion control information might lead to increased queuing and waiting time of data packets in the network, thereby increasing network latency upon data transmission and reducing the response speed and real-time performance of the network. In the congestion control method according to the embodiments of the present disclosure, in a case where the transmission scheduling of the data flow meets the requirement of the flow configuration information, the first node will stop sending the congestion control information to the second node. That is to say, if the second node fails to receive the congestion control information within the preset time period, it is meant that the transmission scheduling of the data flow at this time meets the requirement of the flow configuration information. Therefore, the second node restores the packet transmission rate of the data flow, which may ensure normal transmission of the data flow, and reduce data congestion.

In some embodiments, as shown in FIG. 19, the congestion control method further comprises S401 and S402.

In S401, congestion control cancel information sent by a first node is received.

The congestion control cancel information is used to indicate that the congestion control on the data flow is to be cancelled.

In some embodiments, a protocol stack of the second node comprises a MAC layer and a higher layer above the MAC layer. The receiving congestion control cancel information sent by a first node comprises: receiving a third frame transmitted by the first node, where the third frame comprises the congestion control cancel information; or, receiving, by the MAC layer, an IP data packet sent by the first node in which a congestion control field is set to a second value; or, receiving, by the higher layer above the MAC layer, an IP packet sent by the first node in which the congestion control field is set to the second value.

In S402, a packet transmission rate of the data flow is restored based on the congestion control cancel information.

It may be appreciated that in the congestion control method according to the embodiments of the present disclosure, when the second node receives the congestion control cancel information sent by the first node, different receiving manners (e.g., receiving the third frame, receiving an IP data packet with the congestion control field set to the second value, etc.) may be employed, so that the manners of triggering the cancellation of the congestion control on the data flow may be made more flexible and the flexibility of the solution may be increased.

In some embodiments, the restoring a packet transmission rate of the data flow comprises: restoring the packet transmission rate of the data flow in a case where the second node acts as a transmission end of the data flow; or, transmitting a second control message to a server of the data flow in a case where the second node acts as a receiving end of the data flow, where the second control message is used to instruct the server to restore an downlink packet transmission rate of the data flow.

As an example, in a case where the second node acts as the transmission end of the data flow, upon receiving the congestion control cancel information, the second node generates congestion cancel event information and reports the congestion cancel event information to the higher layer (e.g., a logical link layer) above the MAC layer of the second node. The congestion cancel event information is reported to the higher layer above the MAC layer as a congestion cancel event primitive. The higher layer above the MAC layer may actively restore an uplink or point-to-point packet transmission rate of the data flow. Exemplarily, reference may be made to the above Sd1 for the content of the congestion cancel event primitive, which will not be repeated in the embodiments of the present disclosure.

As another example, in a case where the second node acts as the receiving end of the data flow, upon receiving the congestion control cancel information, the second node generates congestion cancel event information and reports the congestion cancel event information to the higher layer above the MAC layer of the second node. The congestion cancel event information is reported to the higher layer above the MAC layer as a congestion cancel event primitive. The higher layer above the MAC layer may restore the packet transmission rate of the data flow. For example, an application layer of the second node transmits an ICMP message to the server of the data flow to increase the downlink packet transmission rate of the data flow.

As yet another example, in the case where the second node acts as the receiving end of the data flow, after the second node receives the IP packet in which the congestion control field is set to the second value, since it cannot parse a congestion control field containing the first value, the second node may adjust or restore the packet transmission rate of the data flow based on an actual transmission demand of the data flow. For example, the application layer of the second node transmits an ICMP message to the server of the data flow to increase the downlink packet transmission rate of the data flow.

In some embodiments, the congestion control method further comprises: sending second congestion control information to the first node in a case where the transmission scheduling of the data flow cannot meet the requirement of the flow configuration information.

It may be appreciated that the L4S protocol in related technologies only supports the congestion control on L4S data in the downlink direction (i.e., in a case where the second node acts as the receiving end of the data flow), and the second node has no way to inform the first node of the congestion situation of its uplink L4S data through the MAC layer protocol. Correspondingly, the first node cannot perform corresponding uplink scheduling according to the indication of the second node. In addition, the current L4S protocol does not support L4S congestion control in the point-to-point direction. That is, when one second node transmits L4S data to another second node via a point-to-point technology, the second node has no way to inform the first node of the L4S congestion situation in its point-to-point direction through the MAC layer protocol, and the AP cannot perform corresponding point-to-point trigger-based scheduling according to the corresponding L4S indication. In the congestion control method according to the embodiments of the present disclosure, when the second node detects that the transmission scheduling of the data flow cannot meet the requirement of the flow configuration information, it sends congestion control information to the first node to enable the first node to adjust the transmission scheduling of the data flow in time based on the congestion control information, thereby ensuring the transmission latency requirement of the data flow.

In some embodiments, as shown in FIG. 20, the congestion control method further comprises S501 and S502.

In S501, a fifth frame transmitted by the first node is received.

The fifth frame is used to trigger priority transmission of the data flow.

In S502, the data flow is preferentially transmitted based on the fifth frame.

In some embodiments, the fifth frame comprises first indication information to trigger priority transmission of the L4S data flow. After receiving the fifth frame, the second node, based on the first indication information in the fifth frame, preferentially transmits the L4S data flow in the uplink direction or point-to-point direction.

It may be appreciated that in the congestion control method according to the embodiments of the present disclosure, it is possible to, by using the fifth frame to trigger priority transmission of the data flow, ensure a specific data flow (e.g., an L4S data flow) is transmitted with a higher priority, thereby ensure the transmission efficiency of that specific data flow and reduce transmission delay.

In some embodiments, the congestion control method further comprises: reducing the packet transmission rate of the data flow from a higher layer to a lower layer of the protocol stack, in a case where the transmission scheduling of the data flow cannot meet the requirement of the flow configuration information.

In some embodiments, the congestion control method further comprises: restoring the packet transmission rate of the data flow from the higher layer to the lower layer of the protocol stack, in a case where the transmission scheduling of the data flow meets the requirement of the flow configuration information.

In some embodiments, the congestion control method further comprises: transmitting a sixth frame to the first node. The sixth frame comprises flow configuration information of the data flow.

In some embodiments, the sixth frame further comprises at least one of: second indication information, or direction information of the data flow. The second indication information is used to indicate that the data flow is an L4S data flow.

In some embodiments, the flow configuration information comprises flow characteristic information. The flow characteristic information comprises third indication information. The third indication information is used to indicate whether the data flow has characteristics of an L4S data flow.

In some embodiments, reference may be made to the description of the sixth frame in the above S101 for the content of the sixth frame, which will not be repeated in the embodiments of the present disclosure.

In some embodiments, the second node may also receive a seventh frame transmitted by the first node. The seventh frame is used to respond to the sixth frame.

It may be appreciated that in the congestion control method according to the embodiments of the present disclosure, the second node, by sending the flow configuration information of the data flow to the first node, so that the first node may perform effective planning and transmission scheduling of the data flow based on the flow configuration information, to meet the specific transmission demands of different data flows.

In some embodiments, the congestion control method further comprises: transmitting an eighth frame to the first node. The eighth frame is used to modify the flow configuration information of the data flow. Exemplarily, after receiving the eighth frame, the first node updates the locally stored configuration information and L4S indication information, etc. of the data flow, based on the indication of the eighth frame.

In some embodiments, the second node may also receive a ninth frame transmitted by the first node. The ninth frame is used to respond to the eighth frame.

It may be appreciated that in the congestion control method according to the embodiments of the present disclosure, the second node, by transmitting the eighth frame to the first node to enable the first node to modify the flow configuration information of the data flow based on the eighth frame, may dynamically adjust allocation and management policies of network resources to meet different application scenarios and requirements, thereby improving the utilization efficiency of network resources.

According to the congestion control method according to the embodiments of the present disclosure, by receiving the congestion control information sent by the first node and reducing the packet transmission rate of the data flow based on the congestion control information, the second node may perform congestion control on the data flow in time when the transmission of the data flow is about to become congested or is already congested. It may be appreciated that an excessively fast packet transmission rate may lead to problems such as increased transmission delay, data flow loss, and data flow transmission errors. By reducing the packet transmission rate of the data flow, the second node may reduce the amount of transmitted data, avoid excessive data accumulation and congestion, and ensure the stability and reliability of data flow transmission.

The above mainly describes the solutions of the embodiments of the present disclosure from a method perspective. It may be appreciated that to implement the above functions, a congestion control apparatus comprises at least one of corresponding hardware structures and/or software modules for performing respective functions. Those skilled in the art should readily appreciate that, in combination with the units and algorithm steps of the examples described in the embodiments of the present disclosure, the embodiments of the present disclosure can be implemented in hardware or a combination of hardware and computer software. Whether a function is performed by hardware or computer software driving hardware depends on the specific application and design constraints of the technical solution. Those skilled in the art may use different methods for each specific application to implement the described functions, but such implementation should not be considered as going beyond the scope of the present disclosure.

In embodiments of the present disclosure, the congestion control apparatus may be divided into functional modules according to the above method embodiments. For example, each functional module may be divided corresponding to each function, or two or more functions may be integrated into one functional module. The above integrated module may be implemented in the form of hardware or software. It should be noted that the division of modules in the embodiments of the present disclosure is illustrative and is only a logical function division; there may be other division manners in actual implementations. The following illustration is presented by taking an example in which each functional module is divided for each function.

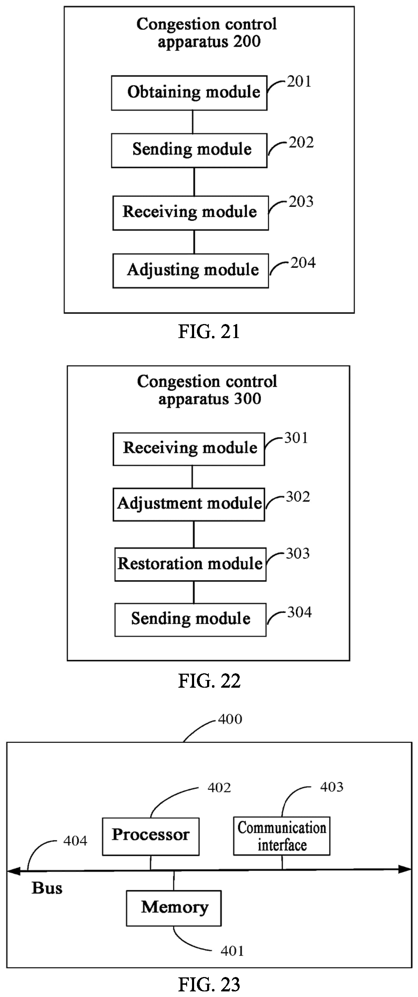

FIG. 21 illustrates a schematic structural diagram of a congestion control apparatus according to an embodiment of the present disclosure. The congestion control apparatus is applied to a first node and may execute the congestion control method according to the above method embodiments. As shown in FIG. 21, the congestion control apparatus 200 comprises: an obtaining module 201, a sending module 202, a receiving module 203, and an adjustment module 204.

The obtaining module 201 is configured to obtain flow configuration information of a data flow.

The sending module 202 is configured to send first congestion control information to a second node in a case where transmission scheduling of the data flow cannot meet a requirement of the flow configuration information. The first congestion control information is used to indicate that congestion control is to be performed on the data flow.

In some embodiments, the sending module 202 is configured, for example, to send a first frame to the second node, the first frame comprising the first congestion control information.

In some embodiments, the first frame further comprises at least one of: a frame type, an Internet Protocol (IP) version information, a transmission direction, a flow label, a stream classification service identifier, a source address, a destination address, a protocol type of the data flow, a source port, or a destination port.

In some embodiments, the receiving module 203 is configured to receive a second frame transmitted by the second node. The second frame is used to respond to the first frame.

In some embodiments, a protocol stack of the first node comprises a MAC layer and a higher layer above the MAC layer. The sending module 202 is used, for example, for the MAC layer or the higher layer above the MAC layer to set a congestion control field in an IP data packet header of the data flow to a first value; and the MAC layer or the higher layer above the MAC layer to send the second node an IP data packet in which the congestion control field is set to the first value.

In some embodiments, the protocol stack of the first node comprises a MAC layer and a higher layer above the MAC layer. The sending module 202 is used, for example, for the MAC layer to send congestion event information to the higher layer above the MAC layer; for the higher layer above the MAC layer, based on the congestion event information, to set the congestion control field in the IP packet of the data flow to the first value; for the higher layer above the MAC layer to send the second node the IP packet in which the congestion control field is set to the first value.

In some embodiments, the congestion event information is a congestion event primitive. The congestion event primitive comprises at least one of: a source address, a destination address, a stream classification service identifier, an IP type, a flow label, a destination port, or source port.

In some embodiments, the sending module 202 is also configured to stop sending the first congestion control information to the second node in a case where the transmission scheduling of the data flow meets the requirement of the flow configuration information.

In some embodiments, the sending module 202 is also configured to send congestion control cancel information to the second node in a case where the transmission scheduling of the data flow meets the requirement of the flow configuration information. The congestion control cancel information is used to indicate that the congestion control on the data flow is to be cancelled.

In some embodiments, the sending module 202 is configured, for example, to send a third frame to the second node. The third frame comprises the congestion control cancel information.

In some embodiments, the third frame further comprises at least one of: a frame type, an IP version information, a transmission direction, a flow label, a stream classification service identifier, a source address, a destination address, a protocol type of the data flow, a source port, or a destination port.

In some embodiments, the receiving module 203 is also configured to receive a fourth frame transmitted by the second node. The fourth frame is used to respond to the third frame.

In some embodiments, the protocol stack of the first node comprises a MAC layer and a higher layer above the MAC layer. The sending module 202 is used, for example, for the MAC layer or the higher layer above the MAC layer to set a congestion control field in an IP packet header of the data flow to a second value; for the MAC layer or a logical link layer to send the second node the IP data packet in which the congestion control field is set to the second value.

In some embodiments, the protocol stack of the first node comprises a MAC layer and a higher layer above the MAC layer. The sending module 202 is configured, for example, for the MAC layer to send congestion cancel event information to the higher layer above the MAC layer; for the higher layer above the MAC layer, based on the congestion cancel event information, to set the congestion control field in the IP layer packet of the data flow to the second value; for the higher layer above the MAC layer to send the second node the IP packet in which the congestion control field is set to the second value.

In some embodiments, the congestion cancel event information is a congestion cancel event primitive. The congestion cancel event primitive comprises at least one of: a source address, a destination address, a stream classification service identifier, an IP type, a flow label, a destination port, or a source port.

In some embodiments, the receiving module 203 is also configured to receive second congestion control information sent by the second node. The adjustment module 204 is configured to adjust the transmission scheduling of the data flow based on the second congestion control information.

In some embodiments, the adjustment module 204 is configured, for example, to send a fifth frame to the second node. The fifth frame is used to trigger priority transmission of the data flow.

In some embodiments, the fifth frame comprises first indication information to trigger priority transmission of an L4S data flow.

In some embodiments, the fifth frame does not include Association Identifier (AID) information of the second node, to trigger any station to contend for a resource unit allocated in the fifth frame to transmit a Low Latency, Low Loss, Scalable Throughput (L4S) data flow.

In some embodiments, the receiving module 203 is also configured to receive a sixth frame transmitted by the second node. The sixth frame comprises the flow configuration information of the data flow.

In some embodiments, the sixth frame further comprises at least one of: second indication information, or a direction information of the data flow, where the second indication information is used to indicate that the data flow is the L4S data flow.

In some embodiments, the flow configuration information comprises flow characteristic information, and the flow characteristic information comprises third indication information. The third indication information is used to indicate whether the data flow has characteristics of the L4S data flow.

In some embodiments, the sending module 202 is also configured to send a seventh frame to the second node. The seventh frame is used to respond to the sixth frame.

In some embodiments, the receiving module 203 is also configured to receive an eighth frame transmitted by the second node. The eighth frame is used to modify the flow configuration information of the data flow.

In some embodiments, the sending module 202 is also used to send a ninth frame to the second node. The ninth frame is used to respond to the eighth frame.

FIG. 22 illustrates a schematic structural diagram of another congestion control apparatus according to an embodiment of the present disclosure. The congestion control apparatus is applied to a second node and may execute the congestion control method according to the above method embodiments. As shown in FIG. 22, the congestion control apparatus 300 comprises: a receiving module 301, an adjustment module 302, a restoration module 303, and a sending module 304.

The receiving module 301 is configured to receive first congestion control information sent by a first node. The first congestion control information is used to indicate that a congestion control is to be performed on a data flow.

The adjustment module 302 is configured to reduce a packet transmission rate of the data flow based on the first congestion control information.

In some embodiments, the adjustment module 302 is configured, for example, to itself reduce the packet transmission rate of the data flow in a case where the second node acts as a transmission end of the data flow; or send a first control message to a server of the data flow in a case where the second node acts as a receiving end of the data flow. The first control message is used to instruct the server to reduce a downlink packet transmission rate of the data flow.

In some embodiments, a protocol stack of the second node comprises a MAC layer and a higher layer above the MAC layer. The receiving module 301 is configured, for example, to receive a first frame transmitted by the first node, the first frame comprising the first congestion control information; or, receive, via the MAC layer, an IP packet sent by the first node in which a congestion control field is set to a first value; or, receive, via the higher layer above the MAC layer, the IP packet sent by the first node in which the congestion control field is set to the first value.

In some embodiments, the restoration module 303 is configured to restore the packet transmission rate of the data flow in a case where the first congestion control information is not received within a preset time period.

In some embodiments, the receiving module 301 is also configured to receive congestion control cancel information sent by the first node, where the congestion control cancel information is used to indicate that the congestion control on the data flow is to be cancelled; the restoration module 303 is also configured to restore the packet transmission rate of the data flow based on the congestion control cancel information.

In some embodiments, the receiving module 301 is configured, for example, to restore the packet transmission rate of the data flow in a case where the second node acts as a transmission end of the data flow; or, send a second control message to a server of the data flow in a case where the second node acts as a receiving end of the data flow. The second control message is used to instruct the server to restore a downlink packet transmission rate of the data flow.

In some embodiments, the protocol stack of the second node comprises a MAC layer and a higher layer above the MAC layer. The receiving module 301 is configured, for example, to receive a third frame transmitted by the first node, the third frame comprising the congestion control cancel information; or, receive, via the MAC layer, an IP packet sent by the first node in which a congestion control field is set to a second value; or, receive, via the higher layer above the MAC layer, the IP packet sent by the first node in which the congestion control field is set to the second value.

In some embodiments, the sending module 304 is used to send second congestion control information to the first node in a case where the transmission scheduling of the data flow cannot meet the requirement of the flow configuration information.

In some embodiments, the receiving module 301 is also configured to receive a fifth frame transmitted by the first node, the fifth frame being used to trigger priority transmission of the data flow; and preferentially transmit the data flow based on the fifth frame.

In some embodiments, the adjustment module 302 is also configured to reduce the packet transmission rate of the data flow from a higher layer to a lower layer of the protocol stack, in a case where the transmission scheduling of the data flow cannot meet the requirement of the flow configuration information.

In some embodiments, the adjustment module 302 is also configured to restore the packet transmission rate of the data flow from the higher layer to the lower layer of the protocol stack, in a case where the transmission scheduling of the data flow meets the requirement of the flow configuration information.

In some embodiments, the sending module 304 is also configured to send a sixth frame to the first node. The sixth frame comprises the flow configuration information of the data flow.

In some embodiments, the sixth frame further comprises at least one of: second indication information, or a direction information of the data flow, wherein the second indication information is used to indicate that the data flow is an L4S data flow.

In some embodiments, the flow configuration information comprises flow characteristic information, and the flow characteristic information comprises third indication information. The third indication information is used to indicate whether the data flow has characteristics of the L4S data flow.

In some embodiments, the receiving module 301 is also configured to receive a seventh frame transmitted by the first node. The seventh frame is used to respond to the sixth frame.

In some embodiments, the sending module 304 is also configured to send an eighth frame to the first node. The eighth frame is used to modify the flow configuration information of the data flow.

In some embodiments, the receiving module 301 is also configured to receive a ninth frame transmitted by the first node. The ninth frame is used to respond to the eighth frame.

In a case where the functions of the above integrated modules are implemented in the form of hardware, an embodiment of the present disclosure provides a structure of a communication device involved in the above embodiment. As shown in FIG. 23, the communication device 400 comprises: a memory 401 and a bus 404. In some embodiments, the communication device 400 may further comprise a memory 401. In some embodiments, the communication device 400 may further comprise a communication interface 403.

The processor 402 may be a device that implements or executes various exemplary logic blocks, modules, and circuits described in connection with the embodiments of the present disclosure. The processor 402 may be a central processing unit, a general-purpose processor, a digital signal processor, an application-specific integrated circuit, a field-programmable gate array, or other programmable logic device, a transistor logic device, a hardware component, or any combination thereof. The processor 402 may implement or execute various exemplary logic blocks, modules, and circuits described in connection with the embodiments of the present disclosure. The processor 402 may also be a combination that implements computing functions, e.g., a combination of one or more microprocessors, a combination of a Digital Signal Processor (DSP) and a microprocessor, or the like.

The communication interface 403 is used to connect to other devices via a communication network. The communication network may be Ethernet, a wireless access network, a Wireless Local Area Network (WLAN), etc.

The memory 401 may be a Read-Only Memory (ROM) or other type of static storage device that may store static information and instructions, a Random Access Memory (RAM) or other type of dynamic storage device that may store dynamic information and instructions, or an Electrically Erasable Programmable Read-Only Memory (EEPROM), a magnetic disk storage medium or other magnetic storage device, or any other medium that can be used to carry or store desired program code in the form of instructions or data structures and that can be accessed by a computer, but is not limited thereto.

As an implementation, the memory 401 may exist independently of the processor 402, and the memory 401 may be connected to the processor 402 via the bus 404 for storing instructions or program codes. When the processor 402 calls and executes the instructions or program codes stored in the memory 401, it can implement the congestion control method according to the embodiments of the present disclosure.

In another implementation, the memory 401 may also be integrated with the processor 402. The bus 404 may be an extended industry standard architecture (EISA) bus, etc. The bus 404 may be divided into an address bus, a data bus, a control bus, etc. For ease of representation, only one thick line is used in FIG. 23 to represent the bus 404, but this does not mean that there is only one bus or one type of bus.

Some embodiments of the present disclosure provide a computer-readable storage medium (e.g., a non-transitory computer-readable storage medium) having computer program instructions stored thereon, which, when executed on a computer, cause the computer to perform the congestion control method according to any of the above embodiments.

Exemplarily, the above computer-readable storage medium may include, but is not limited to: magnetic storage devices (e.g., a hard disk, a floppy disk, or a magnetic tape, etc.), optical disks (e.g., a Compact Disk (CD), a Digital Versatile Disk (DVD), etc.), smart cards, and flash memory devices (e.g., an Erasable Programmable Read-Only Memory (EPROM), a card, a stick, or a key drive, etc.). The various computer-readable storage media described herein may represent one or more devices and/or other machine-readable storage media for storing information. The term "machine-readable storage medium" may include, but is not limited to, wireless channels and various other media capable of storing, containing, and/or carrying instructions and/or data.

An embodiment of the present disclosure provides a computer program product containing instructions, which, when executed on a computer, causes the computer to perform the congestion control method according to any of the above embodiments.

What are described above are merely specific embodiments of the present disclosure, but the protection scope of the present disclosure is not limited thereto. Any changes or substitutions within the technical scope disclosed in the present disclosure shall be covered by the protection scope of the present disclosure. Therefore, the protection scope of the present disclosure shall be subject to the protection scope of the claims.

## Claims

1. A congestion control method, applied to a first node, the method comprising:
obtaining flow configuration information of a data flow; and
in a case where transmission scheduling of the data flow does not meet a requirement of the flow configuration information, sending a second node first congestion control information corresponding to the data flow, the first congestion control information being used to indicate that congestion control is to be performed on the data flow.

2. The method according to claim 1, wherein the sending a second node first congestion control information corresponding to the data flow comprises:
sending a first frame to the second node, the first frame comprising the first congestion control information.

3. The method according to claim 2, wherein the first frame further comprises at least one of: a frame type, internet protocol (IP) version information, a transmission direction, a flow label, a stream classification service identifier, a source address, a destination address, a protocol type of the data flow, a source port, or a destination port.

4. The method according to claim 2, further comprising:
receiving a second frame sent by the second node, the second frame being used to respond to the first frame.

5. The method according to claim 1, wherein a protocol stack of the first node comprises a medium access control (MAC) layer and a higher layer above the MAC layer; and the sending a second node first congestion control information corresponding to the data flow comprises:
setting, via the MAC layer or the higher layer above the MAC layer, a congestion control field in an IP data packet header of the data flow to a first value; and
sending, via the MAC layer or the higher layer above the MAC layer, to the second node the IP data packet in which the congestion control field is set to the first value.

6. The method according to claim 1, wherein a protocol stack of the first node comprises a MAC layer and a higher layer above the MAC layer; and the sending a second node first congestion control information corresponding to the data flow comprises:
sending, via the MAC layer, congestion event information to the higher layer above the MAC layer;
setting, via the higher layer above the MAC layer a congestion control field in an IP data packet of the data flow to a first value based on the congestion event information; and
sending, via the higher layer above the MAC layer, the second node the IP data packet in which the congestion control field is set to the first value.

7. The method according to claim 6, wherein the congestion event information is a congestion event primitive, and the congestion event primitive comprises at least one of: a source address, a destination address, a stream classification service identifier, an IP type, a flow label, a destination port, or a source port.

8. The method according to claim 1, further comprising:
in a case where transmission scheduling of the data flow meets the requirement of the flow configuration information, stopping sending the first congestion control information to the second node.

9. The method according to claim 1, further comprising:
in a case where transmission scheduling of the data flow meets the requirement of the flow configuration information, sending congestion control cancel information to the second node, the congestion control cancel information being used to indicate that congestion control on the data flow is to be cancelled.

10. The method according to claim 9, wherein the sending congestion control cancel information to the second node comprises:
sending a third frame to the second node, the third frame comprising the congestion control cancel information.

11. The method according to claim 10, wherein the third frame further comprises at least one of: a frame type, IP version information, a transmission direction, a flow label, a stream classification service identifier, a source address, a destination address, a protocol type of the data flow, a source port, or a destination port.

12. The method according to claim 10, further comprising:
receiving a fourth frame sent by the second node, the fourth frame being used to respond to the third frame.

13. The method according to claim 9, wherein a protocol stack of the first node comprises a MAC layer and a higher layer above the MAC layer; and the sending congestion control cancel information to the second node comprises:
setting, via the MAC layer or the higher layer above the MAC layer, a congestion control field in an IP data packet header of the data flow to a second value; and
sending, via the MAC layer or the higher layer above the MAC layer, the second node the IP data packet in which the congestion control field is set to the second value.

14. The method according to claim 9, wherein a protocol stack of the first node comprises a MAC layer and a higher layer above the MAC layer; and the sending congestion control cancel information to the second node comprises:
sending, via the MAC layer, congestion cancel event information to the higher layer above the MAC layer;
setting, via the higher layer above the MAC layer, a congestion control field in an IP layer data packet of the data flow to a second value, based on the congestion cancel event information;
sending, via the higher layer above the MAC layer, the IP data packet in which the congestion control field is set to the second value, to the second node.

15. The method according to claim 14, wherein the congestion cancel event information is a congestion cancel event primitive, and the congestion cancel event primitive comprises at least one of: a source address, a destination address, a stream classification service identifier, an IP type, a flow label, a destination port, or a source port.

16. The method according to claim 1, further comprising:
receiving second congestion control information sent by the second node;
adjusting the transmission scheduling of the data flow based on the second congestion control information.

17. The method according to claim 16, wherein the adjusting transmission scheduling of the data flow comprises:
sending a fifth frame to the second node, the fifth frame being used to trigger priority transmission of the data flow.

18. The method according to claim 17, wherein the fifth frame comprises first indication information to trigger priority transmission of a low-latency, low-loss, scalable-throughput (L4S) data flow.

19. The method according to claim 18, wherein the fifth frame further comprises an association identifier (AID) information of the second node to trigger any station to contend for a resource unit allocated at the fifth frame to transmit the L4S data flow.

20. The method according to claim 1, further comprising:
receiving a sixth frame sent by the second node, the sixth frame comprising the flow configuration information of the data flow.

21. The method according to claim 20, wherein the sixth frame further comprises at least one of: second indication information or direction information of the data flow, wherein the second indication information is used to indicate that the data flow is an L4S data flow.

22. The method according to claim 20, wherein the flow configuration information comprises flow characteristic information, and the flow characteristic information comprises third indication information, the third indication information being used to indicate whether the data flow has characteristics of an L4S data flow.

23. The method according to claim 20, further comprising:
sending a seventh frame to the second node, the seventh frame being used to respond to the sixth frame.

24. The method according to claim 20, further comprising:
receiving an eighth frame sent by the second node, the eighth frame being used to modify the flow configuration information of the data flow.

25. The method according to claim 24, further comprising:
sending a ninth frame to the second node, the ninth frame being used to respond to the eighth frame.

26. A congestion control method, applied to a second node, the method comprising:
receiving first congestion control information sent by a first node, the first congestion control information being used to indicate that congestion control is to be performed on a data flow; and
reducing a packet transmission rate of the data flow based on the first congestion control information.

27. The method according to claim 26, wherein the reducing a packet transmission rate of the data flow comprises:
in a case where the second node serves as a transmission end of the data flow, reducing, by the second node itself, the packet transmission rate of the data flow; or
in a case where the second node serves as a receiving end of the data flow, transmitting a first control message to a server of the data flow, the first control message being used to instruct the server to reduce a downlink packet transmission rate of the data flow.

28. The method according to claim 26, wherein a protocol stack of the second node comprises a medium access control (MAC) layer and a higher layer above the MAC layer; and the receiving first congestion control information sent by a first node comprises:
receiving a first frame sent by the first node, the first frame comprising the first congestion control information; or
receiving, via the MAC layer, an IP data packet sent by the first node in which a congestion control field is set to a first value; or
receiving, via the higher layer above the MAC layer, the IP data packet sent by the first node in which the congestion control field is set to the first value.

29. The method according to claim 26, further comprising:
in a case where the first congestion control information is not received within a preset time period, restoring the packet transmission rate of the data flow.

30. The method according to claim 26, further comprising:
receiving congestion control cancel information sent by the first node, the congestion control cancel information being used to indicate that the congestion control on the data flow is to be cancelled;
restoring the packet transmission rate of the data flow based on the congestion control cancel information.

31. The method according to claim 30, wherein the restoring the packet transmission rate of the data flow comprises:
in a case where the second node serves as a transmission end of the data flow, restoring the packet transmission rate of the data flow; or
in a case where the second node serves as a receiving end of the data flow, transmitting a second control message to the server of the data flow, the second control message being used to instruct the server to restore a downlink packet transmission rate of the data flow.

32. The method according to claim 30, wherein a protocol stack of the second node comprises a MAC layer and a higher layer above the MAC layer; and the receiving congestion control cancel information sent by the first node comprises:
receiving a third frame sent by the first node, the third frame comprising the congestion control cancel information; or
receiving, via the MAC layer, an IP data packet sent by the first node in which a congestion control field is set to a second value; or
receiving, via the higher layer above the MAC layer, the IP data packet sent by the first node in which the congestion control field is set to the second value.

33. The method according to claim 26, further comprising:
in a case where transmission scheduling of the data flow does not meet a requirement of flow configuration information, sending second congestion control information to the first node.

34. The method according to claim 33, further comprising:
receiving a fifth frame sent by the first node, the fifth frame being used to trigger priority transmission of the data flow; and
preferentially sending the data flow based on the fifth frame.

35. The method according to claim 26, further comprising:
in a case where transmission scheduling of the data flow does not meet a requirement of flow configuration information, reducing a packet transmission rate of the data flow from a higher layer to a lower layer of the protocol stack.

36. The method according to claim 26, further comprising:
in a case where transmission scheduling of the data flow meets a requirement of flow configuration information, restoring a packet transmission rate of the data flow from a higher layer to a lower layer of the protocol stack.

37. The method according to claim 26, further comprising:
sending a sixth frame to the first node, the sixth frame comprising flow configuration information of the data flow.

38. The method according to claim 37, wherein the sixth frame further comprises at least one of: second indication information or direction information of the data flow, where the second indication information is used to indicate that the data flow is a Low-Latency, Low-Loss, Scalable-Throughput (L4S) data flow.

39. The method according to claim 37, wherein the flow configuration information comprises flow characteristic information, and the flow characteristic information comprises third indication information, the third indication information being used to indicate whether the data flow has characteristics of an L4S data flow.

40. The method according to claim 37, further comprising:
receiving a seventh frame sent by the first node, the seventh frame being used to respond to the sixth frame.

41. The method according to claim 37, further comprising:
sending an eighth frame to the first node, the eighth frame being used to modify the flow configuration information of the data flow.

42. The method according to claim 41, further comprising:
receiving a ninth frame sent by the first node, the ninth frame being used to respond to the eighth frame.

43. A communication device, comprising: a memory and a processor, wherein the memory is coupled to the processor, the memory is configured to store instructions executable by the processor; and the processor, when executing the instructions, performs the method according to any one of claims 1 to 42.

44. A computer-readable storage medium, wherein the computer-readable storage medium has stored thereon computer instructions, which, when executed on an electronic device, cause the electronic device to perform the method according to any one of claims 1 to 42.
